# FASCICULE DE BREVET EUROPEEN

(11) **EP 2 096 266 B1**
(45) Date de publication et mention de la délivrance du brevet: **31.08.2011**
(21) Numéro de dépôt: 08171377.8
(22) Date de dépôt: 11.12.2008
(51) Int. Cl.: F01D 11/00, F04D 29/08, F04D 29/44

(54) **Ensemble diffuseur-redresseur pour une turbomachine**
Diffusor-Gleichrichter-Anordnung für eine Strömungsmaschine
Nozzle-synchronising ring assembly for a turbomachine

(30) Priorité: 27.02.2008 FR 0801064
(43) Date de publication de la demande: 02.09.2009
(73) Titulaire: SNECMA, 75015 Paris (FR)
(72) Inventeur: Hernandez, Didier, Hippolyte, 77720 Quiers (FR); Lunel, Romain, Nicolas, 77950 Montreau Sur Le Jard (FR)
(74) Mandataire: Ramey, Daniel

(56) Documents cités:
- EP-A- 1 149 986
- DE-A1- 2 435 474
- DE-A1-102004 039 473
- FR-A- 2 462 557
- FR-A- 2 581 135
- JP-A- 2000 345 997
- US-A- 3 759 038
- US-A- 3 999 883
- US-A- 4 921 401

## Description

L'invention se rapporte à un ensemble diffuseur-redresseur destiné à l'alimentation en air d'une chambre annulaire de combustion dans une turbomachine telle qu'un turboréacteur ou un turbopropulseur d'avion.

Une turbomachine comprend un compresseur haute-pression débouchant à son extrémité aval à l'entrée d'une chambre de combustion. Dans certaines configurations, où il est souhaitable de réduire la dimension axiale de la turbomachine, le dernier étage de compression est un étage centrifuge dont la sortie est entourée par un diffuseur annulaire radial qui est raccordé à un redresseur annulaire débouchant à l'entrée de la chambre de combustion. Le redresseur comprend une paroi radialement interne de révolution portant une pluralité d'aubes entourées extérieurement par un carter qui s'étend en aval autour de la chambre de combustion.

Un jeu est prévu à froid entre les extrémités radialement externes des aubes du redresseur et le carter externe. En fonctionnement, le redresseur se dilate radialement plus fortement que le carter, et les extrémités radialement externes des aubes viennent en contact avec le carter externe. Le jeu en sommet d'aubes de redresseur est défini de manière à garantir un appui des extrémités radialement externes des aubes du redresseur qui soit suffisamment faible pour éviter de trop contraindre en fonctionnement le carter qui est déjà soumis à de fortes variations de pression dues à la combustion du carburant dans la chambre en aval du compresseur haute pression.

Cependant, le jeu à froid en sommet d'aube ne peut être défini que pour une phase de vol particulière, telle que la phase de croisière qui est la plus longue. Pour les autres phases de vol, les extrémités radialement externes des aubes du redresseur ne sont pas en contact avec le carter, ce qui induit une circulation d'air entre les sommets d'aubes et le carter qui perturbe l'écoulement d'air vers la chambre de combustion ou bien exercent une pression trop importante sur le carter. De plus, lorsque les extrémités d'aubes ne sont pas en appui sur le carter, le redresseur est soumis à des vibrations.

Le document US-3999883, décrit des aubes de stator à calage variable dans une turbine de turbomachine. Chaque aube comprend un pivot à son extrémité radialement externe et des moyens d'étanchéité agencés à l'extrémité radialement interne de l'aube formé par des plaques flexibles soudées à leur extrémité aval sur un carter interne. En fonctionnement, l'air entrant sous les plaques permet de les plaquer sur les extrémités radialement internes des aubes, ce qui évite des circulations d'air en bout d'aubes.

L'invention a notamment pour but d'apporter une solution simple, efficace et économique aux problèmes précités de la technique antérieure.

Elle propose, à cet effet, un ensemble diffuseur-redresseur monté en sortie d'un compresseur centrifuge dans une turbomachine, le diffuseur comprenant deux flasques annulaires amont et aval réunis par des aubes, le flasque annulaire amont étant en appui par son extrémité radialement externe sur un carter externe, le redresseur comprenant une pluralité d'aubes portées par une paroi radialement interne de révolution et entourées par le carter externe, caractérisé en ce que des moyens élastiquement déformables sont intercalés entre les extrémités radialement externes des aubes du redresseur et le carter externe, ces moyens interdisant un passage d'air entre le carter externe et les extrémités radialement externes des aubes.

Ces moyens élastiquement déformables permettent de garantir un contact permanent entre les extrémités radialement externes des aubes et le carter externe, ce qui permet d'absorber et d'amortir une partie des vibrations du redresseur. Ces moyens garantissent également l'étanchéité entre les extrémités radialement externes des aubes du redresseur et le carter, qu'elle que soit la phase de vol. Le flux d'air s'écoulant vers la chambre de combustion n'est ainsi pas perturbé par un écoulement parasite entre le carter et les extrémités radialement externes des aubes du redresseur, ce qui améliore les performances de la turbomachine.

L'appui de l'extrémité radialement externe du flasque annulaire amont sur le carter externe permet un centrage du diffuseur dans le carter externe.

Dans un mode de réalisation de l'invention, les moyens élastiquement déformables comprennent une tôle annulaire dont une partie écartée du carter externe est en appui sur les extrémités radialement externes des aubes et dont au moins une extrémité est en appui sur le carter.

Selon une autre caractéristique de l'invention, une extrémité de la tôle annulaire est fixée au carter externe et son autre extrémité est en appui glissant sur le carter externe.

Ainsi, en fonctionnement, la dilatation différentielle entre le carter et le redresseur conduit les extrémités radialement externes des aubes à appuyer sur la partie de la tôle écartée du carter externe, ce qui implique du fait de la fixation d'une des extrémités de la tôle annulaire au carter de faire coulisser l'autre extrémité de la tôle sur le carter externe.

Avantageusement, l'extrémité de la tôle en appui glissant sur le carter est guidée dans une rainure annulaire d'une extrémité radialement externe d'un flasque annulaire amont du diffuseur. La rainure annulaire peut être formée entre un rebord cylindrique de l'extrémité radialement externe du flasque annulaire amont et le carter externe.

La tôle est préférentiellement réalisée dans un matériau métallique présentant un coefficient de dilatation thermique semblable à ceux du carter et/ou du redresseur, ce qui garantit un comportement mécanique similaire des différentes pièces en contact.

La tôle peut avoir une épaisseur comprise entre 1 mm et 1,5 mm et être fixée par soudure, brasure ou rivetage au carter externe.

Elle peut comprendre un revêtement étanche tel qu'un élastomère par exemple, permettant d'améliorer l'étanchéité du contact de la tôle avec les aubes. Elle peut également comprendre un revêtement résistant à l'usure due aux frottements des extrémités radialement externes des aubes.

Le montage de la tôle peut s'effectuer avec une précontrainte élastique à froid entre le carter externe et les extrémités radialement externes des aubes du redresseur, ce qui permet d'assurer en fonctionnement un rappel élastique permanent de la tôle sur le carter externe et sur les extrémités radialement externes des aubes du redresseur dans toutes les phases de vol.

L'invention concerne encore une turbomachine, telle qu'un turboréacteur ou un turbopropulseur, caractérisée en ce qu'elle comprend un ensemble diffuseur-redresseur tel que décrit précédemment.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique en coupe axiale d'un ensemble diffuseur-redresseur selon la technique antérieure ;
- la figure 2 est une vue schématique en perspective d'un ensemble diffuseur-redresseur selon l'invention.

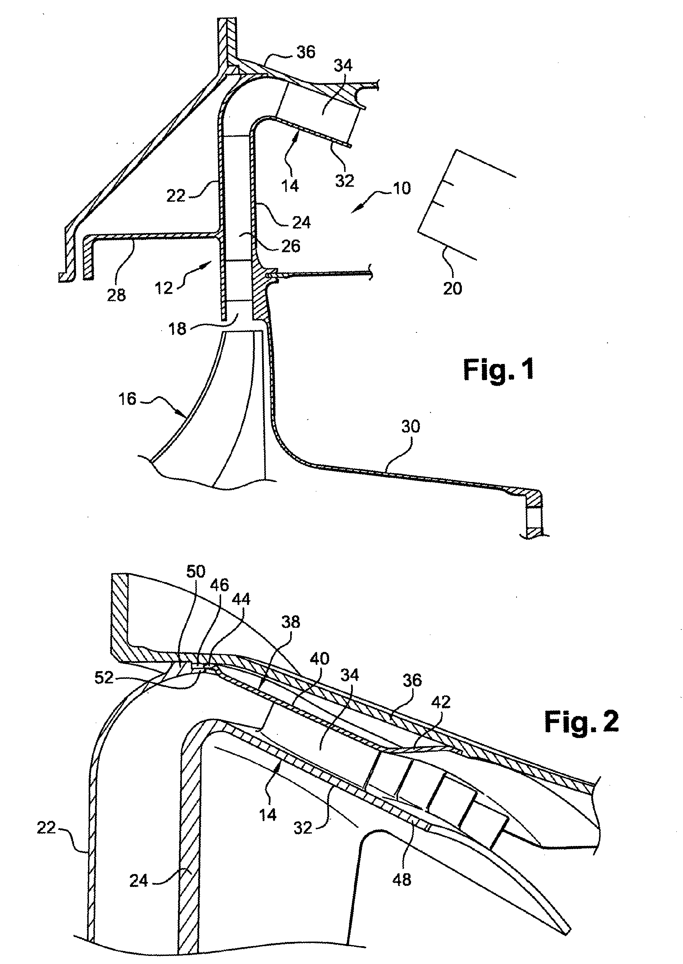

L'ensemble diffuseur-redresseur 10 représenté en figure 1 fait partie des moyens d'alimentation en air d'une chambre annulaire de combustion d'une turbomachine et comprend un diffuseur annulaire radial 12 raccordé en sortie à un redresseur annulaire 14, cet ensemble étant destiné à être monté en sortie du dernier étage centrifuge 16 d'un compresseur de la turbomachine. L'entrée 18 du diffuseur 12 est radialement alignée avec la sortie de l'étage centrifuge 16 et la sortie du redresseur 14 alimente en air la chambre annulaire de combustion 20, d'une façon bien connue de l'homme du métier.

Le diffuseur 12 comporte un flasque annulaire amont 22 et un flasque annulaire aval 24, qui sont parallèles et s'étendent annulairement autour de l'axe de rotation du compresseur et qui sont reliés entre eux par des aubes 26. Les flasques annulaires amont 22 et aval 24 sont maintenus en position par des parois annulaires amont 28 et aval 30, respectivement, fixées sur des parties fixes de la turbomachine.

Le redresseur 14 comprend une paroi tronconique 32 à section se réduisant vers l'aval, portant une pluralité d'aubes 34 sensiblement radiales entourées extérieurement par un carter externe 36.

Lors du montage de l'ensemble diffuseur-redresseur, un jeu est prévu entre les extrémités radialement externes des aubes 34 et le carter 36 pour éviter de précontraindre le carter externe 36 à froid.

En fonctionnement, la dilatation du redresseur 14 qui est plus importante que celle du carter 36 conduit les extrémités radialement externes des aubes 34 du redresseur 14 à entrer en contact avec le carter externe 36, ce qui permet d'éviter une circulation d'air entre les sommets d'aubes 34 et le carter 36 et limite les vibrations du redresseur 14.

Cependant, l'optimisation du jeu ne peut être effectuée que pour une phase de vol spécifique et non pour toute la durée du vol, pour les raisons précédemment évoquées, ce qui limite les performances de la turbomachine.

L'invention permet de supprimer le jeu entre les extrémités radialement externes des aubes 34 et le carter externe 36, grâce à des moyens élastiquement déformables intercalés entre les extrémités des aubes 34 du redresseur 14 et le carter externe 36, ces moyens interdisant tout passage d'air entre le carter 36 et les sommets des aubes 34, et limitant les vibrations du redresseur 14.

Ces moyens comprennent une tôle annulaire 38 formant une paroi de révolution 40 sensiblement parallèle à la paroi interne 32 du redresseur 14. Cette paroi 40 de forme tronconique à section se réduisant vers l'aval est radialement écartée du carter externe 36 et est en contact dans sa partie médiane avec les extrémités radialement externes des aubes 34 du redresseur 14. L'extrémité aval 42 de la paroi tronconique 40 est sensiblement cylindrique et est fixée au carter externe 36, son extrémité amont comprenant un rebord sensiblement cylindrique 44 engagé à glissement dans une rainure annulaire 46.

L'extrémité aval 48 de la paroi interne 32 du redresseur 14 s'étend en aval des aubes 34 du redresseur 14 et est disposée en regard de la paroi cylindrique aval 42 de la tôle annulaire 38.

L'extrémité radialement externe du flasque annulaire amont 22 est courbée vers l'aval et est en appui radial sur le carter externe, ce qui permet un centrage du diffuseur dans le carter externe. Elle comprend une partie annulaire 50 en surépaisseur sur laquelle le carter externe 36 vient en contact radial. La rainure annulaire 46 est formée entre le carter externe 36 et un rebord cylindrique 52 de l'extrémité aval de la partie courbée, la partie en surépaisseur 50 formant le fond de la rainure 46.

Lors du fonctionnement de la turbomachine, la dilatation du redresseur 14 conduit les extrémités radialement externes des aubes 34 à appuyer sur la tôle 38 laquelle va se déformer et se rapprocher du carter externe 36, ce qui du fait de sa fixation à son extrémité aval, induit un glissement de son extrémité amont dans la rainure annulaire 46.

Ainsi, les extrémités radialement externes des aubes 34 sont toujours en contact avec la tôle annulaire 38, ce qui permet durant toute la durée de fonctionnement de la turbomachine, d'une part d'absorber et de limiter les vibrations du redresseur 14 et d'autre part d'éviter que de l'air provenant du diffuseur 12 ne circule entre le carter 36 et les extrémités radialement externes des aubes 34 du redresseur 14. La déformation de la tôle 38 permet d'encaisser tous les écarts de dilatation entre le carter externe 36 et le redresseur 14, ce qui évite que les aubes 34 du redresseur 14 exercent une contrainte sur le carter externe 36.

La rainure annulaire 46 doit présenter une profondeur axiale suffisante pour permettre le déplacement axial de l'extrémité amont de la tôle annulaire 38 du à la fois à la dilatation du redresseur 14 et à la dilatation de la tôle annulaire 38 elle-même.

Avantageusement, la tôle 38 est réalisée dans un matériau métallique présentant un coefficient de dilatation thermique semblable à ceux du carter externe 36 et/ou du redresseur 14, afin de garantir en fonctionnement un comportement similaire de la tôle par rapport à ceux du redresseur 14 et du carter 36.

Le montage de la tôle 38 peut s'effectuer avantageusement avec une précontrainte élastique à froid entre le carter externe 36 et les extrémités radialement externes des aubes 34 du redresseur 14, ce qui permet d'assurer en fonctionnement un rappel élastique permanent de la tôle 38 sur le carter externe 36 et les extrémités radialement externes des aubes 34 du redresseur 14.

La tôle 38 peut être réalisée d'un seul tenant sur 360° et peut comporter sur sa surface interne un revêtement étanche par exemple en élastomère afin d'améliorer l'étanchéité de l'appui de la tôle 38 sur les extrémités des aubes 34. Elle peut également comprendre un revêtement permettant de résister à l'usure des extrémités radialement externes des aubes 34 du redresseur 14.

L'épaisseur de la tôle 38 est d'environ 1 mm à 1,5 mm.

L'extrémité aval de la paroi cylindrique 42 de la tôle 38 peut être fixée par soudure, brasure ou rivetage au carter externe 36.

Dans un autre mode de réalisation de l'invention non représenté aux dessins, la tôle 38 pourrait être fixée au carter externe 36 à son extrémité amont et glisser dans une rainure annulaire à son extrémité aval.

## Revendications

1. Ensemble diffuseur-redresseur monté en sortie d'un compresseur centrifuge dans une turbomachine, l'ensemble comprenant en outre un carter externe, le diffuseur comprenant deux flasques annulaires amont (22) et aval (24) réunis par des aubes (26), le flasque annulaire amont étant en appui par son extrémité radialement externe sur le carter externe, le redresseur comprenant une pluralité d'aubes (34) portées par une paroi radialement interne de révolution (32) et entourées par le carter externe (36), **caractérisé en ce que** des moyens élastiquement déformables sont intercalés entre les extrémités radialement externes des aubes (34) du redresseur (14) et le carter externe (36), ces moyens interdisant un passage d'air entre le carter externe (36) et les extrémités radialement externes des aubes (34).

2. Ensemble selon la revendication 1, **caractérisé en ce que** les moyens élastiquement déformables comprennent une tôle annulaire (38) dont une partie écartée (40) du carter externe (36) est en appui sur les extrémités radialement externes des aubes (34) et dont au moins une extrémité est en appui sur le carter (36).

3. Ensemble selon la revendication 2, **caractérisé en ce qu'**une extrémité de la tôle annulaire (38) est fixée au carter externe (36) et son autre extrémité est en appui glissant sur le carter externe (36).

4. Ensemble selon la revendication 3, **caractérisé en ce que** l'autre extrémité de la tôle (38) est guidée dans une rainure annulaire (46) d'une extrémité radialement externe d'un flasque annulaire amont (22) du diffuseur (12).

5. Ensemble selon la revendication 4, **caractérisé en ce que** la rainure annulaire (46) est formée entre un rebord cylindrique (52) de l'extrémité radialement externe du flasque annulaire amont (22) et le carter externe (36).

6. Ensemble selon l'une des revendications 2 à 5, **caractérisé en ce que** la tôle (38) a une épaisseur d'environ 1 mm à 1,5 mm.

7. Ensemble selon l'une des revendications 2 à 6, **caractérisé en ce que** la tôle (38) est réalisée dans un matériau métallique présentant un coefficient de dilatation thermique semblable à ceux du carter (36) et du redresseur (14).

8. Ensemble selon l'une des revendications 2 à 7, **caractérisé en ce que** la tôle (38) est fixée par soudure, brasure ou rivetage au carter externe (36).

9. Ensemble selon l'une des revendications 2 à 8, **caractérisé en ce que** la tôle (38) comprend un revêtement étanche tel qu'un élastomère par exemple.

10. Ensemble selon l'une des revendications 2 à 9, **caractérisé en ce que** la tôle (38) comprend un revêtement résistant à l'usure.

11. Ensemble selon l'une des revendications 2 à 10, **caractérisée en ce que** la tôle (38) est montée avec une précontrainte élastique entre le carter externe (36) et les extrémités radialement externes des aubes (34) du redresseur (14).

12. Turbomachine, telle qu'un turboréacteur ou un turbopropulseur, **caractérisée en ce qu'**elle comprend un ensemble diffuseur-redresseur selon l'une des revendications 1 à 11.

## Claims

1. A diffuser-nozzle assembly mounted at the outlet from a centrifugal compressor in a turbomachine, the assembly further comprising an outer casing, the diffuser comprising two annular plates, an upstream plate (22) and a downstream plate (24), that are joined together by vanes (26), the upstream annular plate having its radially outer end bearing against the outer casing, the nozzle comprising a plurality of vanes (34) carried by a radially inner wall forming a surface of revolution (32) and surrounded by the outer casing (36), the assembly being **characterized in that** elastically deformable means are interposed between the radially outer ends of the vanes (34) of the nozzle (14) and the outer casing (36), said means preventing air from passing between the outer casing (36) and the radially outer ends of the vanes (34).

2. An assembly according to claim 1, **characterized in that** the elastically deformable means comprise an annular metal sheet (38) having a portion that is spaced apart from the outer casing (36) bearing against the radially outer ends of the vanes (34), and having at least one end bearing against the casing (36).

3. An assembly according to claim 2, **characterized in that** one end of the annular metal sheet (38) is fastened to the outer casing (36) and its other end bears slidingly against the outer casing (36).

4. An assembly according to claim 3, **characterized in that** the other end (38) of the metal sheet (38) is guided in an annular groove (46) in a radially outer end of the upstream annular plate (22) of the diffuser (12).

5. An assembly according to claim 4, **characterized in that** the annular groove (46) is formed between a cylindrical rim (52) of the radially outer end of the upstream annular plate (22) and the outer casing (36).

6. An assembly according to one of the claims 2 to 5, **characterized in that** the metal sheet (38) has a thickness of about 7. mm to 1.5 mm.

7. An assembly according to one of the claims 2 to 6, **characterized in that** the metal sheet (38) is made of a material presenting a coefficient of thermal expansion similar to the coefficients of expansion of the casing (36)and of the nozzle (14).

8. An assembly according to one of the claims 2 to 7, **characterized in that** the metal sheet (38) is fastened to the outer casing (36) by welding, brazing, or riveting.

9. An assembly according to one of the claims 2 to 8, **characterized in that** the metal sheet (38) includes a sealing coating such as an elastomer, for example.

10. An assembly according to one of the claims 2 to 9, **characterized in that** the metal sheet (38) includes a coating that withstands wear.

11. An assembly according to one of the claims 2 to 10, **characterized in that** the metal sheet (38) is mounted with elastic prestress between the outer casing (36) and the radially outer ends of the vanes (34) of the nozzle (14).

12. A turbomachine, such as a turbojet or a turboprop, **characterized in that** it includes a diffuser-nozzle assembly according to one of the claims 1 to 11.

## Patentansprüche

1. Diffusor-Gleichrichter-Anordnung, die am Auslass eines Radialverdichters in einer Turbomaschine montiert ist, wobei die Anordnung ferner ein Außengehäuse aufweist, wobei der Diffuser zwei ringförmige Flansche aufweist, nämlich einen vorderen (22) und einen hinteren (24), die über Schaufeln (26) verbunden sind, wobei der vordere ringförmige Flansch mit seinem radial äußeren Ende an dem Außengehäuse anliegt, wobei der Gleichrichter eine Mehrzahl von Schaufeln (34) aufweist, die von einer radial inneren Umlaufwand (32) getragen und von dem Außengehäuse (36) umgeben werden, **dadurch gekennzeichnet, dass** zwischen den radial äußeren Enden der Schaufeln (34) des Gleichrichters (14) und dem Außengehäuse (36) elastisch verformbare Mittel eingesetzt sind, wobei diese Mittel einen Luftdurchtritt zwischen dem Außengehäuse (36) und den radial äußeren Enden der Schaufeln (34) unterbinden.

2. Anordnung nach Anspruch 1, **dadurch gekennzeichnet, dass** die elastisch verformbaren Mittel ein Ringblech (38) aufweisen, von dem ein vom Außengehäuse (36) entfernt liegender Abschnitt in Anlage an den radial äußeren Enden der Schaufeln (34) ist und von dem zumindest ein Ende in Anlage am Gehäuse (36) ist.

3. Anordnung nach Anspruch 2, **dadurch gekennzeichnet, dass** das eine Ende des Ringblechs (38) am Außengehäuse (36) befestigt ist und das andere Ende gleitend in Anlage am Außengehäuse (36) ist.

4. Anordnung nach Anspruch 3, **dadurch gekennzeichnet, dass** das andere Ende des Blechs (38) in einer Ringnut (46) eines radial äußeren Endes eines vorderen Ringflanschs (22) des Diffusors (12) geführt wird.

5. Anordnung nach Anspruch 4, **dadurch** gekennzeichet, dass die Ringnut (46) zwischen einer zylindrischen Randleiste (52) des radial äußeren Endes des vorderen Ringflansches (22) und dem Außengehäuse (36) gebildet ist.

6. Anordnung nach einem der Ansprüche 2 bis 5, **dadurch gekennzeichnet, dass** das Blech (38) eine Dicke von etwa 1 mm bis 1,5 mm hat.

7. Anordnung nach einem der Ansprüche 2 bis 6, **dadurch gekennzeichnet, dass** das Blech (38) aus einem metallischen Werkstoff mit einem Wärmedehnungskoeffizienten ähnlich wie der des Gehäuses (36) und des Gleichrichters (14) hergestellt ist.

8. Anordnung nach einem der Ansprüche 2 bis 7, **dadurch gekennzeichnet, dass** das Blech (38) durch Verschweißen, Löten oder Nieten am Außengehäuse (36) befestigt ist.

9. Anordnung nach einem der Ansprüche 2 bis 8, **dadurch gekennzeichnet, dass** das Blech (38) eine dichte Beschichtung, wie beispielsweise ein Elastomer, aufweist.

10. Anordnung nach einem der Ansprüche 2 bis 9, **dadurch gekennzeichnet, dass** das Blech (38) eine verschleißfeste Beschichtung aufweist.

11. Anordnung nach einem der Ansprüche 2 bis 10, **dadurch gekennzeichnet, dass** das Blech (38) unter Federvorspannung zwischen dem Außengehäuse (36) und den radial äußeren Enden der Schaufeln (34) des Gleichrichters (14) montiert ist.

12. Turbomaschine, wie etwa Turbostrahltriebwerk bzw. Turbopropellertriebwerk, **dadurch gekennzeichnet, dass** sie eine Diffusor-Gleichrichter-Anordnung nach einem der Ansprüche 1 bis 11 aufweist.
